(19) Europäisches Patentamt
European Patent Office
Office européen des brevets

(11) **EP 2 580 096 B1**

(12) **EUROPÄISCHE PATENTSCHRIFT**

(45) Veröffentlichungstag und Bekanntmachung des Hinweises auf die Patenterteilung:
**03.01.2018   Patentblatt 2018/01**

(21) Anmeldenummer: **11726092.7**

(22) Anmeldetag: **07.06.2011**

(51) Int Cl.:
**B60T 8/32** *(2006.01)*        **B60T 8/40** *(2006.01)*
**B60T 13/74** *(2006.01)*

(86) Internationale Anmeldenummer:
**PCT/EP2011/059320**

(87) Internationale Veröffentlichungsnummer:
**WO 2011/154369 (15.12.2011 Gazette 2011/50)**

(54) **VERFAHREN UND REGELSCHALTUNG ZUR REGELUNG EINES BREMSSYSTEMS FÜR KRAFTFAHRZEUGE**

METHOD AND CONTROL CIRCUIT FOR CONTROLLING A BRAKING SYSTEM FOR MOTOR VEHICLES

PROCÉDÉ ET CIRCUIT DE RÉGULATION POUR RÉGULER UNE INSTALLATION DE FREINAGE D'UN VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.06.2011   DE 102011076952**
**10.06.2010   DE 102010029900**
**10.06.2010   DE 102010029898**
**10.06.2010   DE 102010029897**

(43) Veröffentlichungstag der Anmeldung:
**17.04.2013   Patentblatt 2013/16**

(73) Patentinhaber: **Continental Teves AG & Co. oHG 60488 Frankfurt (DE)**

(72) Erfinder: **BÖHM, Jürgen 65558 Oberneisen (DE)**

(56) Entgegenhaltungen:
**WO-A1-2006/111393        WO-A1-2008/025797**
**DE-A1-102009 033 499     FR-A3- 2 924 082**
**US-A1- 2003 160 503**

**Beschreibung**

Die Erfindung betrifft ein Verfahren zur Regelung eines Bremssystems für Kraftfahrzeuge gemäß dem Oberbegriff von Anspruch 1 sowie eine Regelschaltung.

In der Kraftfahrzeugtechnik finden "Brake-by-wire"-Bremssysteme eine immer größere Verbreitung. Solche Bremssysteme umfassen oftmals eine Pedalentkopplungseinheit, welche einem Hauptbremszylinder vorgeschaltet ist, wodurch eine Bremspedalbetätigung durch den Fahrer in der Betriebsart "Brake-by-wire" zu keiner direkten Betätigung des Hauptbremszylinders durch den Fahrer führt. Der Hauptbremszylinder wird stattdessen in der Betriebsart "Brake-by-wire" durch eine elektrisch steuerbare Druckbereitstellungseinrichtung betätigt, also "fremd"-betätigt. Um dem Fahrer in der Betriebsart "Brake-by-wire" ein angenehmes Pedalgefühl zu vermitteln, umfassen die Bremsanlagen üblicherweise eine Bremspedalgefühl-Simulationseinrichtung. Bei diesen Bremssystemen kann die Bremse auch ohne aktives Zutun des Fahrzeugführers aufgrund elektronischer Signale betätigt werden. Diese elektronischen Signale können beispielsweise von einem elektronischen Stabilitätsprogramm ESC oder einem Abstandsregelsystem ACC ausgegeben werden.

Aus der internationalen Patentanmeldung WO 2008/025797 A1 ist ein derartiges Bremssystem bekannt. Um auf eine aufwändige und energetisch ungünstige Zwischenspeicherung hydraulischer Stellenergie verzichten zu können, wird vorgeschlagen, dass das zur elektrischen Regelung des in einem zur Betätigung des Hauptbremszylinders verwendeten Zwischenraum eingesteuerten Druckes benötigte Druckmittel in der Druckbereitstellungseinrichtung drucklos bereitgehalten und bei Bedarf unter einen höheren Druck gesetzt wird. Die Druckbereitstellungseinrichtung wird hierzu z.B. durch eine Zylinder-Kolben-Anordnung gebildet, deren Kolben durch einen elektromechanischen Aktuator betätigbar ist. Ein Verfahren zur Regelung des Bremssystems, insbesondere der Druckbereitstellungseinrichtung, wird nicht beschrieben.

Es ist daher Aufgabe der vorliegenden Erfindung, ein Verfahren zur Regelung eines elektrohydraulischen "Brake-by-wire"-Bremssystems mit einer elektrisch steuerbaren Druckbereitstellungseinrichtung, welche eine Zylinder-Kolben-Anordnung umfasst, deren Kolben durch einen elektromechanischen Aktuator betätigbar ist, bereitzustellen.

Diese Aufgabe wird erfindungsgemäß durch ein Verfahren gemäß Anspruch 1 gelöst.

Vorteilhafte Weiterbildungen des erfindungsgemäßen Verfahrens sind in den abhängigen Ansprüchen angegeben.

Vorteilhafterweise wird das erfindungsgemäße Verfahren in einem Bremssystem für Kraftfahrzeuge durchgeführt, das in einer sog. "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist.

Bevorzugt wird eine Aktuatorpositionsregelung durchgeführt, wenn eine mechanische Endlage des Aktuators erkannt werden soll.

Ebenso ist es bevorzugt, dass nach der Druck- oder Aktuatorpositionsregelung eine Aktuatorgeschwindigkeitsregelung durchgeführt wird, in welcher die aktuelle Aktuatorgeschwindigkeit auf den von der Druck- oder Aktuatorpositionsregelung ausgegebenen Sollwert für die Aktuatorgeschwindigkeit geregelt wird.

Vorteilhafterweise wird bei der Aktuatorgeschwindigkeitsregelung das von der Motormomentenvorsteuerung ausgegebene Motormoment berücksichtigt.

Gemäß einer Weiterbildung der Erfindung wird der Drucksollwert, vorteilhafterweise der Fahrerwunsch-Drucksollwert, aus der Summe eines ersten Solldruckanteils und eines zweiten Solldruckanteils gebildet.

Bevorzugt wird der zweite Solldruckanteil in Abhängigkeit von der Bremspedal-Betätigungsgeschwindigkeit und einer Pedalgeschwindigkeitsschwelle bestimmt.

Die Pedalgeschwindigkeitsschwelle wird besonders bevorzugt anhand eines vorgegebenen funktionalen Zusammenhangs aus einer Pedalposition/-weg bestimmt.

Vorteilhafterweise wird die Pedalgeschwindigkeitsschwelle in Abhängigkeit der Fahrzeuggeschwindigkeit gewählt. So kann der anhand des funktionalen Zusammenhangs berechnete Wert der Pedalgeschwindigkeitsschwelle zusätzlich mit einer Funktion der Fahrzeuggeschwindigkeit multipliziert werden.

Gemäß einer bevorzugten Ausführungsform wird ein Quotient aus Bremspedalgeschwindigkeit und Pedalgeschwindigkeitsschwelle berechnet und in Abhängigkeit der Größe des Quotienten der zweite Solldruckanteil bestimmt, wobei der zweite Solldruckanteil aus dem Quotienten und dem ersten Solldruckanteil berechnet wird, vorteilhafterweise wenn der Quotient größer als Eins ist.

Gemäß einer anderen bevorzugten Ausführungsform wird ein, insbesondere erwarteter, Druckgradient bestimmt, und in Abhängigkeit von der Größe des Drucksollwertes und/oder der Größe des Druckgradienten eine Druckregelung oder eine Aktuatorpositionsregelung oder eine kombinierte Druck-/Aktuatorpositionsregelung der Druckbereitstellungseinrichtung durchgeführt.

Es ist bevorzugt, anhand des Drucksollwertes in einem Aktuatorpositionsregler ein erster Teil-Sollwert für die Aktuatordrehzahl und in einem Druckregler ein zweiter Teil-Sollwert für die Aktuatorgeschwindigkeit zu bestimmen, und aus dem ersten und dem zweiter Teil-Sollwert einen Sollwert für die Aktuatorgeschwindigkeit einer Geschwindigkeitsregelung der Druckbereitstellungseinrichtung zu bestimmen.

Bevorzugt wird der Sollwert für die Aktuatorgeschwindigkeit durch gewichtete Addition aus dem ersten und dem zweiter Teil-Sollwert bestimmt. Besonders bevorzugt wird der jeweilige Gewichtungsfaktor in Abhängigkeit von dem erwarteten Druckgradienten bestimmt. Ganz besonders bevorzugt werden die Gewichtungsfaktoren anhand von zumindest einer vorgegebenen Funktion aus dem Druckgradienten bestimmt.

Bevorzugt wird eine ausschließliche Druckregelung der Druckbereitstellungseinrichtung durchgeführt, wenn der Drucksollwert größer als Null bar ist und der Druckgradient kleiner als ein vorgegebener, positiver erster Wert ist.

Eine ausschließliche Aktuatorpositionsregelung der Druckbereitstellungseinrichtung wird bevorzugt dann durchgeführt, wenn der Drucksollwert größer als Null bar ist und der Druckgradient größer als ein vorgegebener zweiter Wert ist, und insbesondere kein Bremsregeleingriff vorliegt.

Die kombinierte Druck-/Positionsregelung der Druckbereitstellungseinrichtung wird vorteilhafterweise dann durchgeführt, wenn der Drucksollwert größer als Null bar ist und der Druckgradient größer als ein vorgegebener erster Wert und kleiner als ein vorgegebener zweiter Wert ist, und insbesondere kein Bremsregeleingriff vorliegt.

Weitere bevorzugte Ausführungsformen der Erfindung ergeben sich aus den Unteransprüchen und der nachfolgenden Beschreibung anhand von Figuren.

Es zeigen schematisch:

Fig. 1     eine beispielhafte Grundstruktur einer bekannten Bremsanlage,

Fig. 2     eine beispielhafte Regelstruktur zum Realisieren des erfindungsgemäßen Verfahrens,

Fig. 3     eine beispielhafte Ausführung einer Bremsdrucksollwertberechnung,

Fig. 4     eine Darstellung zur Bestimmung einer Bremspedalgeschwindigkeitsschwelle,

Fig. 5     ein Flussdiagramm zur Bestimmung eines dynamischen Solldruckanteils,

Fig. 6     ein Flussdiagramm zur Bestimmung des BremsdruckSollwerts,

Fig. 7     ein Ausführungsbeispiel eines erfindungsgemäßen Druckreglers mit nachgeschalteter Drehzahlregelung,

Fig. 8     eine beispielhafte Solldrehzahlbegrenzung,

Fig. 9     ein Ausführungsbeispiel eines erfindungsgemäßen Aktuatorpositionsreglers mit nachgeschalteter Drehzahlregelung,

Fig. 10    eine Weiterbildung des in Fig. 7 und 9 gezeigten Druck-/Aktuatorpositionsreglers, und

Fig. 11    eine beispielhafte Darstellung einer beim erfindungsgemäßen Verfahren verwendbaren Gewichtungsfunktion.

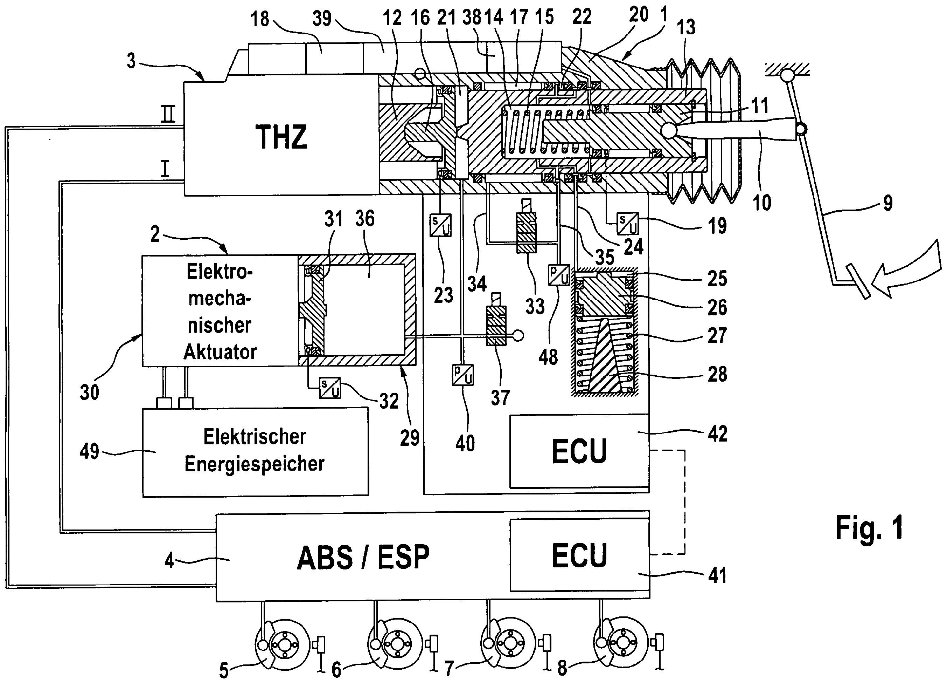

Das in Fig. 1 dargestellte Bremssystem besteht im Wesentlichen aus einer Betätigungseinrichtung 1, einer Druckbereitstellungseinrichtung 2, wobei die Betätigungseinheit und die Druckbereitstellungseinrichtung einen Bremskraftverstärker bilden, sowie einem dem Bremskraftverstärker wirkungsmäßig nachgeschalteten Hauptbremszylinder bzw. Tandemhauptzylinder 3, dessen nicht dargestellte Druckräume mit den unter Atmosphärendruck stehenden Kammern eines ersten Druckmittelvorratsbehälters 18 verbindbar sind. Andererseits sind an die Druckräume Radbremskreise I, II angeschlossen, die unter Zwischenschaltung eines bekannten ABS- oder ESP-Hydroaggregats bzw. eines steuerbaren Radbremsdruckmodulationsmoduls die Radbremsen 5 - 8 eines Kraftfahrzeuges mit hydraulischem Druckmittel versorgen. Dem Radbremsdruckmodulationsmodul 4 ist eine elektronische Steuer- und Regeleinheit 41 zugeordnet. Die Betätigungseinrichtung 1, die in einem Gehäuse 20 angeordnet ist, an dem der Tandemhauptzylinder 3 befestigt ist, ist über ein Bremspedal 9 ansteuerbar, das über eine Betätigungsstange 10 mit einem ersten Kolben 11 der Betätigungseinrichtung 1 wirkungsmäßig verbunden ist. Der Betätigungsweg des Bremspedals 9 wird mittels eines vorzugsweise redundant ausgeführten Wegsensors 19 erfasst, der den Weg des ersten Kolbens 11 erfasst. Zum gleichen Zweck kann jedoch auch ein Drehwinkelsensor verwendet werden, der den Drehwinkel des Bremspedals 9 erfasst. Der erste Kolben 11 ist in einem zweiten Kolben 12 angeordnet, in dem er eine Druckkammer 14 begrenzt, die eine Druckfeder 15 aufnimmt, die bei unbetätigtem Bremspedal 9 den ersten Kolben 11 zur Anlage am zweiten Kolben 12 bringt. Alternativ oder zusätzlich kann im Bereich der Druckstange 10 oder des Bremspedals 9 eine Pedalrückstellfeder vorgesehen sein. Die Druckkammer 14 ist in unbetätigtem Zustand der Betätigungseinrichtung 1 mit einer Kammer 38 eines zweiten Druckmittelvorratsbehälters 38, 39 verbunden, der der Betätigungseinrichtung 1 zugeordnet ist. Der zweite Kolben 13 wirkt mit einem dritten Kolben 13 zusammen, der den Primärkolben des Tandemhauptzylinders 3 bilden kann, wobei im dargestellten Beispiel zwischen dem zweiten (12) und dem dritten Kolben 13 ein Druckübersetzungskolben 16 angeordnet ist. Zwischen dem zweiten Kolben 12 und dem Druckübersetzungskolben 16 ist ein Zwischenraum 21 begrenzt, durch dessen Beaufschlagen mit einem hydraulischen Druck der zweite Kolben 12 an einem im Gehäuse 20 ausgebildeten Anschlag 22 gehalten wird, während der Druckübersetzungskolben 16 und damit der Primärkolben 12 des Tandemhauptzylinders im Sinne eines Druckaufbaus im Tandemhauptzylinder 3 beaufschlagt werden. Eine aus dieser Belastung resultierende Bewegung des Druckübersetzungskolbens 16 wird mittels eines zweiten Wegsensors 23 erfasst. Außerdem begrenzt der zweite Kolben 12 im Gehäuse 20 eine hydraulische Kammer 17, deren Funktion im nachfolgenden Text erläutert wird. An die hydraulische Kammer 17 ist eine erste Leitung 34 angeschlossen, die über ein stromlos offenes (SO-) Sperrventil 33 mit einer zweiten Leitung 35 verbunden ist, die an die vorhin erwähnte Druckkammer 14 angeschlossen ist.

Weiterhin ist Fig. 1 zu entnehmen, dass die vorhin erwähnte Druckkammer 14 über eine absperrbare Verbindungsleitung 24 mit einer hydraulischen Simulatorkammer 25 in Verbindung steht, die von einem Simulatorkolben 26 begrenzt wird. Dabei wirkt der Simulatorkolben 26 mit einer Simulatorfeder 27 sowie einer der Simulatorfeder 27 parallel geschalteten Elastomerfeder 28 zusammen. Dabei bilden die Simulatorkammer 25, der Simulatorkolben 26, die Simulatorfeder 27 sowie die Elastomerfeder 28 einen Pedalwegsimulator, der dem Fahrzeugführer bei der Betätigung des Bremssystems das gewohnte Pedalgefühl vermittelt, das einer üblichen Bremspedalcharakteristik entspricht. Dies bedeutet, dass bei geringem Bremspedalweg der Widerstand langsam ansteigt und bei größerem Bremspedalweg überproportional zunimmt. Zur Dämpfung der Bewegung des Simulatorkolbens 26 können nicht dargestellte, beispielsweise pneumatische Dämpfungsmittel vorgesehen sein. Die hydraulische Verbindungsleitung 24 zwischen der Simulatorkammer 25 und der Druckkammer 14 bzw. der Kammer 38 des zweiten Druckmittelvorratsbehälters wird durch eine Bewegung des zweiten Kolbens 12 in Betätigungsrichtung des Hauptbremszylinders 3 abgesperrt, wodurch der Pedalwegsimulator wirkungsmäßig abgeschaltet wird. Der erste Kolben 11, die Feder 15, die hydraulische Kammer 14, die hydraulische Verbindung 24, die Simulatorkammer 25, der Simulatorkolben 26, die Simulatorfedern 18 und 27, sowie die nicht dargestellten Dämpfungsmittel bilden zusammen die Simulationseinrichtung, die zusammen mit einer unter Atmosphärendruck stehenden Kammer 38 des zweiten Druckmittelvorratsbehälters einem ersten Bremskraftverstärkerdruckmittelkreis zugeordnet ist, der von den Radbremskreisen I, II vollständig getrennt ist.

Die vorhin erwähnte elektrohydraulische Druckbereitstellungseinrichtung 2 besteht im Wesentlichen aus einer hydraulischen Zylinder-Kolben-Anordnung 29 sowie einem elektromechanischen Aktuator 30, der beispielsweise durch einen Elektromotor mit einem Untersetzungsgetriebe gebildet wird, das eine translatorische Bewegung eines hydraulischen Kolbens 31 gewährleistet, so dass in einem Druckraum 36 der hydraulischen Zylinder-Kolben-Anordnung 29 ein hydraulischer Druck aufgebaut wird. Der elektromechanische Aktuator 30 wird von einem elektrischen Energiespeicher mit Energie versorgt, der mit dem Bezugszeichen 49 versehen ist. Die Bewegung des Kolbens 31 wird mittels eines Wegsensors erfasst, der mit dem Bezugszeichen 32 versehen ist. Der Druckraum 36 ist einerseits an den Zwischenraum 21 angeschlossen und andererseits mittels eines stromlos offenen (SO-) 2/2-Wegeventils 37 mit einer unter Atmosphärendruck stehenden Kammer 39 des zweiten Druckmittelvorratsbehälters verbindbar. Dabei sind die Druckbereitstellungseinrichtung 2, der Zwischenraum 21 sowie die Kammer 39 des zweiten Druckmittelvorratsbehälters einem zweiten Bremskraftverstärkerdruckmittelkreis zugeordnet, der sowohl vom ersten Bremskraftverstärkerdruckmittelkreis als auch von den Radbremskreisen I, II vollständig getrennt ist. Ein Drucksensor 40 dient dem Erfassen des von der Druckbereitstellungseinrichtung 2 bereitgestellten bzw. des im Zwischenraum 21 herrschenden Druckes.

Das vorhin erwähnte Sperrventil 33 ermöglicht ein Absperren der Kammer 17 gegenüber der Druckkammer 14, wodurch eine Bewegung des zweiten Kolbens 12 in Betätigungsrichtung verhindert wird. Die Kammer 17, die erste Druckmittelleitung 34, das Sperrventil 33, die zweite Druckmittelleitung 35, die Druckkammer 14, die Verbindungsleitung 24, die Simulatorkammer 25 sowie der zweite Druckmittelvorratsbehälter 38 bilden einen zweiten Bremskraftverstärkerdruckmittelkreis, der vom ersten Bremskraftverstärkerdruckmittelkreis sowie von den beiden Radbremskreisen I, II vollständig getrennt ist. Den genannten Elementen ist eine eigene elektronische Steuereinheit 42 zugeordnet, die mit der vorhin erwähnten elektronischen Steuer- und Regeleinheit 41 zusammenwirkt und die der Erfassung von Sensordaten, der Verarbeitung dieser Daten, dem Austausch von Daten mit anderen, im Fahrzeug vorhandenen, nicht gezeigten Steuereinheiten, der Ansteuerung des elektromechanischen Aktuators 30, sowie der Bremsleuchten des Fahrzeugs dient.

Die Funktionsweise des oben beschriebenen Bremssystems ist beispielsweise aus der zum Stand der Technik zitierten internationalen Patentanmeldung der Anmelderin bekannt und braucht im nachfolgenden Text nicht näher erläutert zu werden.

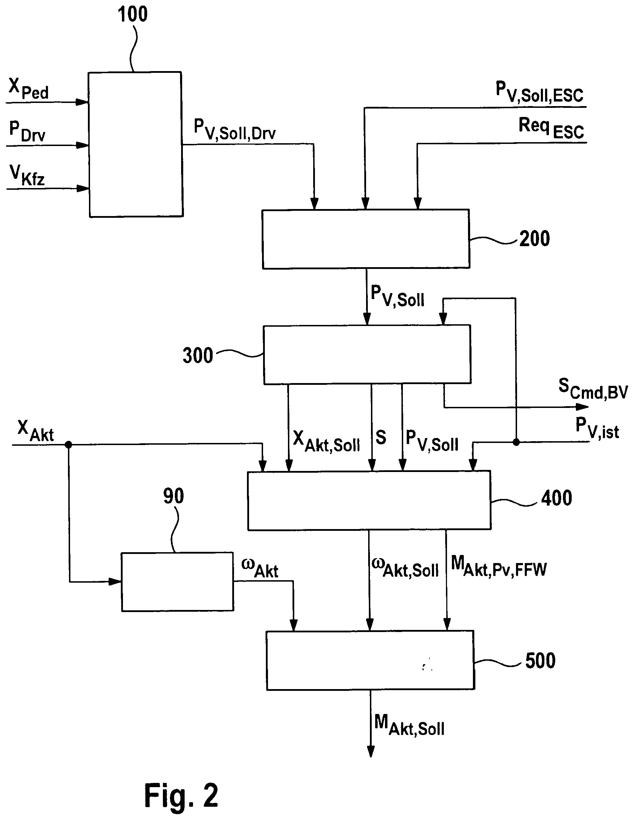

Die Grundstruktur eines bei der in Fig. 1 dargestellten Bremsanlage verwendbaren Regelsystems ist in Fig. 2 schematisch dargestellt. Es besteht im Wesentlichen aus den Funktionsblöcken "Fahrerwunscherfassung" 100, "Sollwertauswahl" 200, "Reglerselektion" 300 sowie einer "Druck-/Aktuatorpositionsregelung" 400, der eine "Aktuatorgeschwindigkeitsregelung" 500 nachgeschaltet ist. Bei einem Aktuator mit einem Elektromotor entspricht die "Aktuatorgeschwindigkeitsregelung" 500 der Drehzahlregelung des Elektromotors.

Die Aktuatorgeschwindigkeit/-drehzahl kann aus der Aktuatorposition berechnet werden (Block 90: "Drehzahlberechnung").

Die Funktionseinheit "Fahrerwunscherfassung" 100 ermittelt aus den der Pedaleinheit zugeordneten Sensoren den Fahrerwunsch und berechnet hieraus ein Signal für den Sollverstärkerdruck $P_{V,soll,Drv}$ des Linearaktuators.

Je nach Ausführung der Bremsanlage stehen hierbei ein oder mehrere Sensorsignale zur Verfügung, welche den Fahrerwunsch repräsentieren. Bei der im Zusammenhang mit Fig. 1 beschriebenen beispielsgemäßen Bremsanlage wird die Pedalposition redundant (Signal $X_{Ped}$) sowie die vom Fahrer erzeugte Pedalkraft mittels eines Drucksensors (Signal $P_{Drv}$) ermittelt. Somit stehen der Fahrerwunscherfassung 100 beispielsgemäß zwei physikalisch voneinander unabhängige Informationen für die, den Fahrerbremswunsch repräsentierende Fahrerbetätigung zur Sollwertgenerierung der erforderlichen Bremskraftverstärkung mittels des Aktuators zur Verfügung.

Ausgangsgröße der Funktionseinheit "Fahrerwunscherfassung" 100 ist ein aufgrund der Fahrerpedalbetätigung ermittelter Druck-Sollwert (Druck-Sollwert des Aktuators, Signal $P_{V,Soll,Drv}$) der, solange keine Eingriffe seitens des übergeordneten Druckregelsystems (z.B. Antiblockier-System, Fahrdynamik-Regelsystem oder ähnliches), z.B. ESP-Druckregelsystems (ESP: Elektronisches Stabilitätsprogramm), vorliegen, zumindest statisch dem Bremsdruck in den Radbremsen entspricht.

Optional wird der Funktionseinheit "Fahrerwunscherfassung" 100 die Fahrzeuggeschwindigkeit $V_{Kfz}$ zugeführt. Der Druck-Sollwert $P_{V,Soll,Drv}$ kann dann zusätzlich in Abhängigkeit der Fahrzeuggeschwindigkeit $V_{Kfz}$ modifiziert werden.

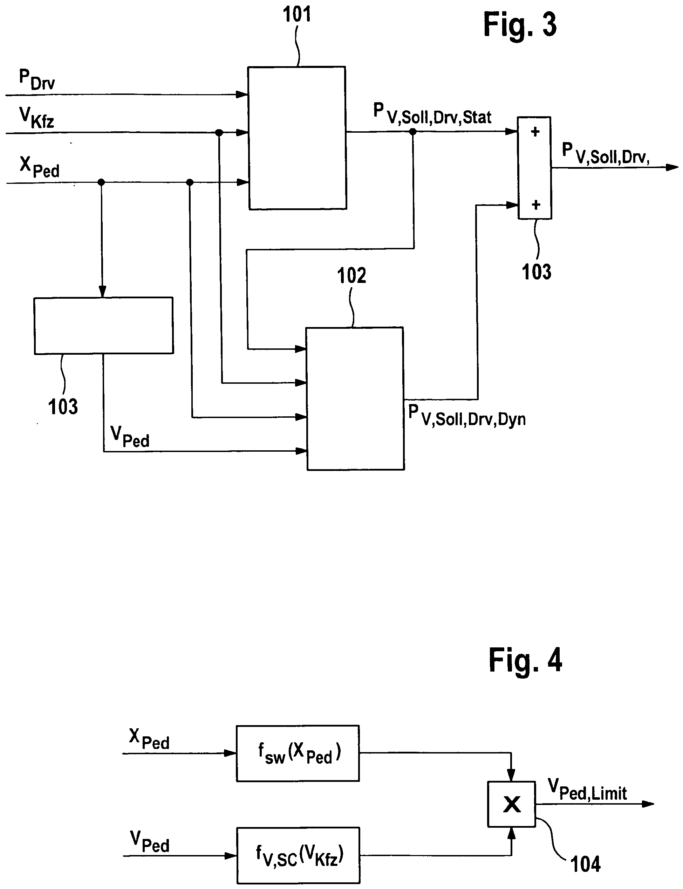

Die Funktionseinheit "Fahrerwunscherfassung" 100 wird im Zusammenhang mit Fig. 3 detaillierter beschrieben. Wie oben bereits erwähnt, ermittelt die Funktionseinheit "Fahrerwunscherfassung" 100 aus den der Pedaleinheit zugeordneten Sensoren den Fahrerwunsch und berechnet hieraus ein Signal für den Druck-Sollwert $P_{V,Soll,Drv}$ des Aktuators.

Eine verbesserte Fahrerwunscherfassung wird dadurch erreicht, dass zusätzlich die Pedalantrittsgeschwindigkeit $V_{Ped}$ berücksichtigt wird. Im Gegensatz zu bekannten Bremsassistenten-Funktionen, die auf den Maximaldruck aussteuern, sobald die, maßgeblich durch die Pedalantrittgeschwindigkeit festgelegten, Auslösekriterien erfüllt sind, wird hier nun berücksichtigt, wie stark die Auslöseschwelle überschritten wurde.

Fig. 3 zeigt eine Grundstruktur einer beispielsgemäßen Fahrerwunscherfassung, welche um die Berechnung und Überlagerung eines dynamischen Druckanteils erweitert ist. Der in Fig. 3 dargestellte Funktionsblock 101 "Fahrerwunschberechnung" liefert einen statischen Druck-Sollwertanteil $P_{V,Soll,Drv,Stat}$ basierend auf bekannten Funktionen/Methoden. Z.B. kann der statische Druck-Sollwertanteil $P_{V,Soll,Drv,Stat}$ mittels eines Modells anhand eines vorgegebenen funktionalen Zusammenhangs f aus einer oder mehreren Größen berechnet werden. So kann der statische Druck-Sollwertanteil z.B. anhand einer Funktion $P_{V,Soll} = f\,(X_{Ped})$ aus der Pedalposition/-betätigung $X_{Ped}$ oder allgemeiner anhand einer Funktion $P_{V,Soll} = f\,(X_{Ped}, P_{Drv}, V_{Kfz})$ aus der Pedalposition $X_{Ped}$, der Pedalkraft (bzw. entsprechendem Druck) $P_{Drv}$ und der Fahrzeuggeschwindigkeit $V_{Kfz}$ berechnet werden.

Die Pedalantrittsgeschwindigkeit $V_{Ped}$ kann z.B. aus der Pedalposition $X_{Ped}$ bzw. deren zeitlichem Verlauf bestimmt werden (Funktionsblock 103 "Berechnung Pedalgeschwindigkeit").

Der Funktionsblock "Berechnung dynamischer Druckanteil" 102 ermittelt im Wesentlichen aus der Pedalgeschwindigkeit $V_{Ped}$ einen dynamischen Druck-Sollwertanteil $P_{V,Soll,Drv,Dyn}$, der maßgeblich davon abhängt, wie weit die Pedalgeschwindigkeitsschwelle überschritten wurde. Wie Fig. 3 zu entnehmen ist, werden die beiden Druck-Sollwertanteile $P_{V,Soll,Drv,Stat}$ und $P_{V,Soll,Drv,Dyn}$ in einem Addierer 103 zu einem Druck-Sollwert $P_{V,Soll,Drv}$ zusammen addiert.

Das in Fig. 4 dargestellte Blockschaltbild zeigt die Bildung der im vorhergehenden Absatz angesprochenen Pedalgeschwindigkeitsschwelle $V_{Ped,Limit}$. Die Geschwindigkeitsschwelle $V_{Ped,Limit}$ kann als ein voreingestellter Wert festgelegt werden oder in Abhängigkeit des Pedalweges $X_{Ped}$ in Form anhand eines funktionalen Zusammenhangs $V_{Ped,Limit} = f_{sw}(X_{Ped})$ bestimmt werden. Der funktionale Zusammenhang $f_{sw}(X_{Ped})$ kann dabei in Form einer statischen Gleichung (Funktion $f_{SW}$) oder auch als Tabelle definiert sein.

Wie aus Fig. 4 hervor geht, ist es auch möglich, die festgelegte bzw. aufgrund des Pedalweges $X_{Ped}$ ermittelte Geschwindigkeitsschwelle $V_{Ped,Limit}$ in Abhängigkeit der Fahrzeuggeschwindigkeit $V_{Kfz}$ nochmals zu skalieren. Die Skalierung erfolgt in einem Multiplizierer, der mit dem Buchstaben X angedeutet wird und der mit dem Bezugszeichen 104 versehen ist. Damit kann z.B. erreicht werden, dass dieser dynamische Druckanteil bei niedrigeren Fahrzeuggeschwindigkeiten oder im Stand nicht oder nur stark abgeschwächt zur Wirkung kommt, während er bei der Fahrt je nach Auslegungskriterium in vollem Umfang zum Tragen kommt.

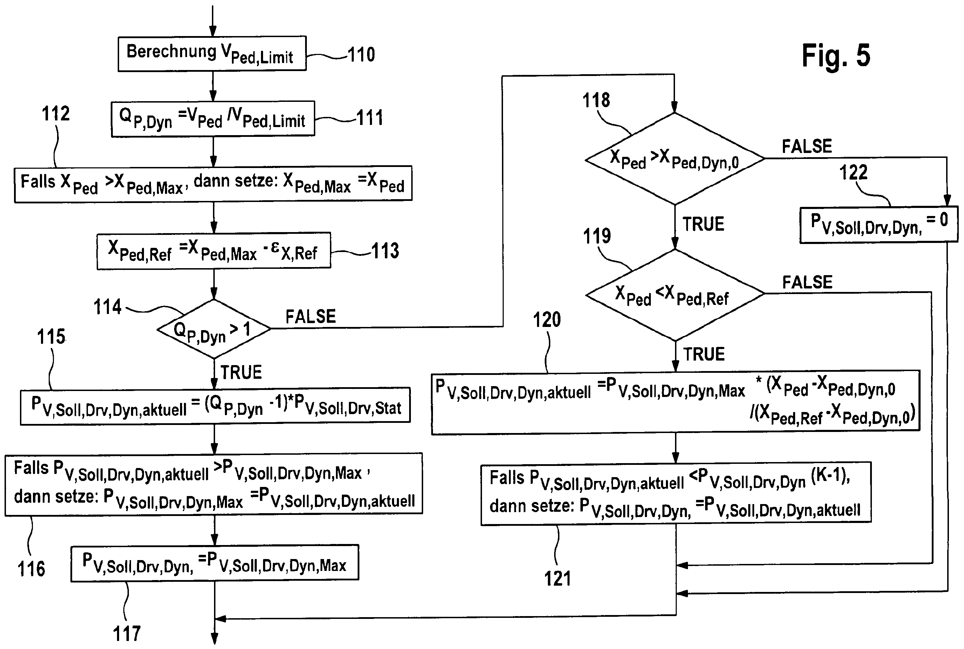

Die in Fig. 4 dargestellte Bildung der Pedalgeschwindigkeitsschwelle $V_{Ped,Limit}$ wird in Fig. 5 durch den Funktionsblock 110 repräsentiert. Als Maß dafür, wie weit die ermittelte aktuelle Pedalgeschwindigkeitsschwelle $V_{Ped,Limit}$, die im Block 110 in Abhängigkeit des Pedalweges $X_{Ped}$ ermittelt wird, überschritten wird, wird der Quotient aus der Pedalgeschwindigkeit $V_{Ped}$ und der Pedalgeschwindigkeitsschwelle $V_{Ped,Limit}$ gebildet (Block 111):

$$Q_{P,Dyn} = V_{Ped} \ / \ V_{Ped,Limit}$$

Für den Fall, dass der aktuelle Pedalweg $X_{Ped}$ das während der gegenwärtigen Bremsenbetätigung auftretende Maximum des Pedalweges $X_{Ped,Max}$ darstellt, wird im Funktionsblock 112 dieser Wert als neues Maximum $X_{Ped,Max}$ übernommen. Im folgenden Block 113 wird anhand des ermittelten aktuellen Maximalwertes für den Pedalweg $X_{Ped,Max}$ ein Referenzweg $X_{Ped,Ref}$ berechnet, der sich durch Subtraktion einer Toleranzschwelle $\varepsilon_{X,Ref}$ von $X_{Ped,Max}$ ergibt. Der Referenzweg $X_{Ped,Ref}$ stellt eine Wegschwelle dar, die für den Abbau des dynamischen Solldruckanteils beim Lösen der Bremse relevant ist.

Im Abfrageblock 114 wird geprüft, ob der Quotient $Q_{P,Dyn} > 1$ ist. Ist diese Bedingung erfüllt, so wird ein dynamischer Druckanteil gemäß

$$P_{V,Soll,Drv,Dyn,aktuell} = (Q_{P,Dyn} - 1) * P_{V,Soll,Drv,Stat}$$

berechnet (Block 115).

Für den Fall, dass dieser Anteil $P_{V,Soll,Drv,Dyn,aktuell}$ das während der gegenwärtigen Bremsenbetätigung berechnete Maximum des dynamischen Druckanteils darstellt, wird dieser Wert als neues Maximum $P_{V,Soll,Drv,Dyn,Max}$ übernommen (Funktionsblock 116). Das so ermittelte Maximum des dynamischen Druckanteils wird im Funktionsblock 117 dem der Größe $P_{V,Soll,Dyn}$, die das Signal für den dynamischen Druckanteil repräsentiert, zugewiesen, welches dann als Ausgangsgröße des Funktionsblockes 102 dem Sollverstärkerdruck $P_{V,Soll,Drv,Stat}$ additiv überlagert wird (siehe Fig. 3).

Beim Lösen der Bremse (d.h. $V_{Ped} < 0$) wird dieser dynamische Druckanteil $P_{V,Soll,Drv,Dyn}$ wieder bis auf den Wert 0 abgebaut. Aus Komfortgründen findet diese Reduzierung des dynamischen Drucksollwertes in Abhängigkeit des Pedalweges statt und zwar so, dass von dem während der Bremsenbetätigung in Block 113 ermittelten Referenzweg $X_{Ped,Ref}$, der vom während der Bremsung festgestellten maximalen Pedalweg abhängt, linear mit dem Weg $X_{Ped}$ bis zum Wert $X_{Ped} = X_{Ped,Dyn,0}$ zu Null reduziert wird. Fig. 5 verdeutlicht diese Vorgehensweise in Form eines Flussdiagramms (Blöcke 118- 122).

Wird im Abfrageblock 114 festgestellt, dass der Quotient $Q_{P,Dyn} \leq 1$ ist, dann handelt es sich um eine Bremsenbetätigung, die keine weitere Erhöhung des dynamischen Druckanteils mehr erfordert oder es findet ein Lösen der Bremse statt. Zunächst wird im Abfrageblock 118 geprüft, ob der Pedalweg $X_{Ped}$ größer als die untere Schwelle $X_{Ped,Dyn,0}$ ist. Ist dies nicht der Fall, so ist diese untere Schwelle unterschritten und der dynamische Drucksollwert wird zu Null gesetzt, $P_{VSoll,Dyn} = 0$ (Block 122). Ist der Pedalweg $X_{Ped}$ größer als die untere Schwelle $X_{Ped,Dyn,0}$, wird im Abfrageblock 119 geprüft, ob die für den Abbau des dynamischen Druck-sollwertes notwendige obere Schwelle, gegeben durch den Referenzweg $X_{Ped,Ref}$, unterschritten ist. Ist dies der Fall, so wird in Funktionsblock 120 der während der Bremsung ermittelte Maximalwert $P_{V,Soll,Drv,Dyn,Max}$ linear mit dem Pedalweg $X_{Ped}$ verringert und dem Signal $P_{V,Soll,Drv,Dyn,Aktuell}$ zugewiesen. Ist dieser Wert kleiner als der dynamische Drucksollwert $P_{V,Soll,Drv,Dyn}$ (k-1) des vorangegangenen Abtastschrittes (k-1), dann wird in Funktionsblock 121 dieser Wert $P_{V,Soll,Drv,Dyn,Aktuell}$ der Größe $P_{V,Soll,Dyn}$, die das Signal für den dynamischen Druckanteil repräsentiert, zugewiesen, welches dann wiederum als Ausgangsgröße des Funktionsblockes 102 dem Sollverstärkerdruck $P_{V,Soll,Drv,Stat}$ additiv überlagert wird (siehe Fig. 3).

Wird im Abfrageblock 119 festgestellt, dass der aktuelle Pedalweg $X_{Ped}$ größer oder gleich dem Referenzweg $X_{Ped,Ref}$ ist, wird der der dynamische Drucksollwert $P_{V,Soll,Drv,Dyn}$ (k-1) des vorangegangenen Abtastschrittes (k-1) unverändert beibehalten.

Die oben beschriebene Vorgehensweise bei der Berücksichtigung der Pedalgeschwindigkeit $V_{Ped}$ führt bei einem schnellen Antritt des Bremspedals zu einer Verschiebung des Zusammenhangs $P_{V,Soll} = f (X_{Ped})$ bzw. $P_{V,Soll} = f (X_{Ped}, P_{Drv}, V_{Kfz})$ hin zu höheren Verstärker- und damit auch Bremsdrücken, die umso stärker vorgenommen wird, je schneller der Fahrer das Bremspedal betätigt. Bei schneller Bremspedalbetätigung wird der Sollverstärkerdruck $P_{V,Soll,Drv}$ im Linearaktuator bereits bei kleineren Bremspedalwegen $X_{Ped}$ erreicht als dies bei einer langsamen Betätigungen der Fall ist. Dies führt zu einer Erhöhung der Dynamik der Bremsanlage verbunden mit einem schnelleren Ansprechen der Bremse bei der Fahrerbetätigung (Verkürzung der Ansprechzeit). Bei einer langsamen Pedalbetätigung ($V_{Ped}$ klein) bzw. ($0 < Q_{P,Dyn} < 1$) ist dieser dynamische Druckanteil nicht vorhanden, sodass für diesen Fall die Ermittlung des Sollverstärkerdruckes in erster Linie nach Komfortkriterien ausgelegt werden kann. Werden vom Fahrer schnelle Bremsenreaktionen gefordert, so wird dies durch den Anteil $P_{V,Soll,Drv,Dyn}$ eingestellt.

Ebenfalls vorteilhaft im Hinblick auf den Betätigungskomfort und die Sicherstellung einer vorhersagbaren Verhaltens ist es, dass der dynamische Anteil beim Lösen der Bremse bzw. des Bremspedals nicht sprungförmig, sondern linear mit dem Pedalweg wieder bis auf den Wert 0 zurückgenommen wird.

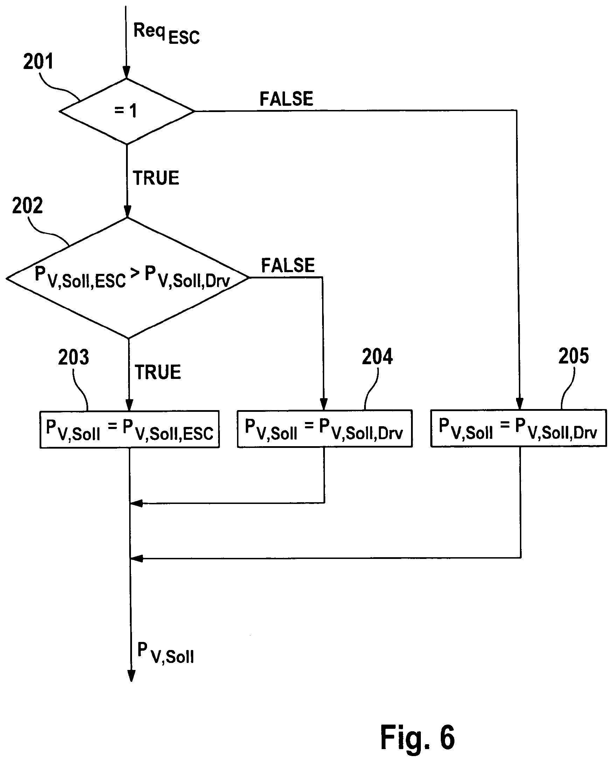

Neben dem oben beschriebenen Sollwert $P_{V,Soll,Drv}$ aufgrund der Fahrerpedalbetätigung kann auch das übergeordnete Druckregelsystem einen Druck-Sollwert $P_{V,Soll,ESC}$ entsprechend seiner Regelstrategie (ABS (Antiblockier-System), TCS (Traktionskontrollsystem), ESP o.ä.) anfordern. Daher wird eine Sollwertauswahl in Block 200 (Fig. 2) durchgeführt. Die Ausgangsgröße dieses Funktionsblockes 200 ist der resultierende Druck-Sollwert $P_{V,Soll}$. Eine beispielsgemäße Sollwertauswahl ist in Fig. 6 dargestellt. Im Abfrageblock 201 wird geprüft, ob ein Steuersignal $Req_{ESC}$ = 1. Ist diese Bedingung erfüllt, wird im Abfrageblock 202 geprüft, ob die Ungleichung $P_{V,Soll,ESC} > P_{V,Soll,Drv}$ erfüllt ist. Bei einer aktiven Anforderung ergibt sich der Druck-Sollwert $P_{V,Soll}$ aus dem Maximalwert der beiden Werte $P_{V,Soll,ESC}$ und $P_{V,Soll,Drv}$ (siehe Funktionsblöcke 203 und 204).

Ist die vorhin genannte Bedingung nicht erfüllt, so liegt keine Druckanforderung durch das übergeordnete Regelsystem vor und damit wird als Sollwert für die Aktuatorregelung das Signal $P_{V,Soll,Drv}$ ausgegeben (s. Funktionsblock 205)

In Abhängigkeit des ermittelten Druck-Sollwertes $P_{V,Soll}$ erfolgt die Reglerselektion im Funktionsblock 300 (s. Fig. 2). Liegt ein Solldruck $P_{V,Soll} > 0$ bar vor, so wird die Druck-/Aktuatorpositionsregelung (Funktionsblock 400, Fig. 2) aktiviert (Selektionsparameter S = 1), die den gewünschten Druck einstellt. Gleichzeitig wird die hydraulische Verbindung zwischen dem Aktuator und dem Behälter unterbrochen (z.B. durch Bestromung des zwischen der Zylinder-Kolben-Anordnung 30 und dem Behälter 39 angeordneten stromlos offenen Schaltventils 37 (Ansteuersignal $S_{Cmd,BV}$), welches damit geschlossen wird). Der Aktuatorpositionsregler (Block 400) wird aktiviert bzw. es wird vom Druckregler auf den Positionsregler umgeschaltet (Selektionsparameter S = 0), sobald ein Solldruck von $P_{V,Soll} = 0$ bar vorliegt und der aktuell vorliegende Verstärkerdruck $P_{V,Ist}$ kleiner als eine vorab definierte Mindestdruckschwelle $P_{V,Ist,Min}$ ist. In diesem Fall wird auch das oben genannte Ventil 37 wieder geöffnet, damit der Aktuator bei Bedarf aus dem Behälter 39 Volumen nachsaugen kann. Der Sollwert für die Aktuatorposition entspricht hierbei der Null-Position des Aktuators, die mit einer definierten Aktuatorgeschwindigkeit angefahren werden soll und bei der der Aktuator sich in einem unbetätigten Zustand befindet. In dieser Position baut die Bremsanlage keinen Bremsdruck auf.

Die Aktuatorpositionsregelung wird ebenfalls aktiviert, um im Rahmen einer Initialisierungsroutine bei Programmstart die Nullposition des Aktuators ($X_{Akt,0}$) durch Detektion der hinteren mechanischen Endlage ($X_{Akt,Mech,0}$) zu ermitteln. Hierzu wird bei geöffnetem Behälterventil 37 der Positions-Sollwert langsam rampenförmig verkleinert, solange bis der Linearaktuator seine hintere Endposition erreicht. In diesem Fall kommt die Bewegung des Aktuators zum Stillstand und das Motormoment steigt stark an. Diese beiden Kriterien werden zur Detektion von $X_{Akt,Mech,0}$ ausgewertet. Ist dies erfolgt, so wird ebenfalls bei geöffnetem Behälterventil BV die Nullposition des Aktuators $X_{Akt,0} = X_{Akt,Mech,0} + \Delta X_{Akt,0}$ angefahren. Der Offsetwert $\Delta X_{Akt,0}$ stellt einen definierten Sicherheitsabstand dar, der ein Anschlagen der Aktuators an der hinteren Endposition während des Normalbetriebs der Bremsenregelung (z.B. durch Unterschwingen der Regelung) vermeiden soll.

Über den Selektionsparameter S wird in Block 400 entweder der Aktuatorpositionsregler oder der Verstärkerdruckregler aktiviert. Beide Regler haben als Ausgangsgröße einen Sollwert für die Aktuatorgeschwindigkeit, welche beispielsgemäß der Motordrehzahl $\omega_{Akt,Soll}$ entspricht.

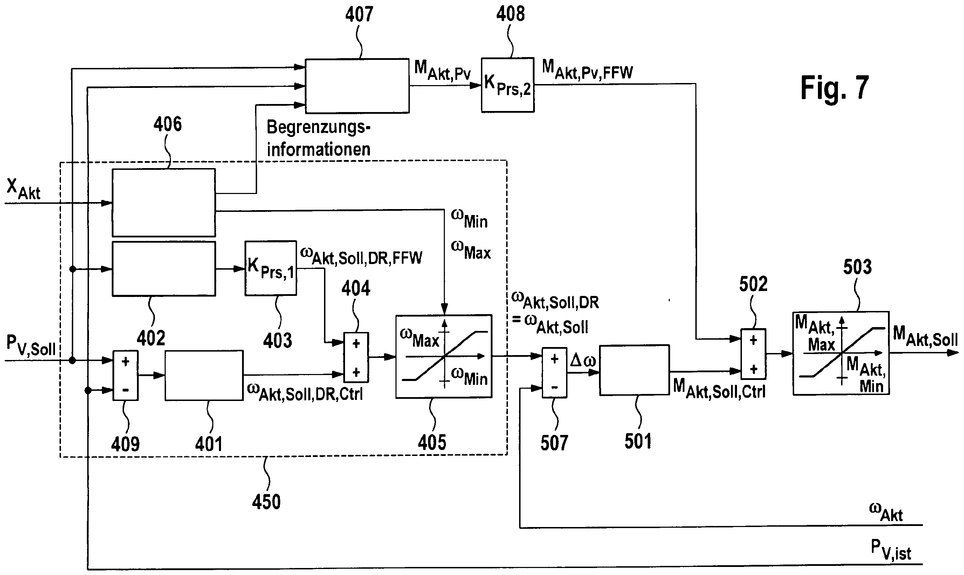

Der Druckregler wird aktiviert, wenn ein Bremswunsch vorliegt und ein definierter Verstärkerdruck $P_{V,Soll}$ eingestellt werden soll. Ein Ausführungsbeispiel eines Druckreglers 401 mit nachgeschaltetem Aktuatordrehzahlregler 501 ist in Fig. 7 schematisch dargestellt. Der Druckregler 401 regelt die in einem Subtraktionsglied 409 gebildete Abweichung $\Delta P$ zwischen dem geforderten Sollverstärkerdruck $P_{V,Soll}$ und dem gegenwärtig vorliegenden Istverstärkerdruck $P_{V,Ist}$ durch Vorgabe einer Solldrehzahl $\omega_{Akt,Soll,DR,Ctrl}$ ein. Als Reglerübertragungsverhalten ist ein proportional wirkender Regler ausreichend. Zur Erhöhung der Druckreglerdynamik können zwei Vorsteuerfunktionen verwendet werden: die Geschwindigkeitsvorsteuerung und die Motormomentenvorsteuerung.

Die Geschwindigkeitsvorsteuerung bestimmt aus dem Druck-Sollwert $P_{V,Soll}$ durch Differentiation eine Solldruckgeschwindigkeit (Funktionsblock 402: Berechnung Solldruckänderung), die mit einem Verstärkungsfaktor $K_{Prs,1}$ gewichtet (Funktionsblock 403) einen zusätzlichen Anteil $\omega_{Akt,Soll,DR,FFW}$ der Ausgangsgröße des Druckreglers $\omega_{Akt,Soll,DR,Ctrl}$ überlagert. Die beiden Drehzahl-Sollwertanteile $\omega_{Akt,Soll,DR,FFW}$, $\omega_{Akt,Soll,DR,Ctrl}$ werden in einem Addierer 404 zusammen addiert und einer Begrenzungsfunktion 405 zur Begrenzung auf die minimal bzw. maximal zulässige Solldrehzahl ($\omega_{Min}$, $\omega_{Max}$) zugeführt. Die genannten Minimal- und Maximalwerte für die Drehzahl-Sollwerte $\omega_{Min}$, $\omega_{Max}$ werden in einem Drehzahl-Sollwertberechnungsmodul 406 berechnet, dem als Eingangsgröße das den Aktuatorweg repräsentierende Signal $X_{Akt}$ zugeführt wird.

Der so begrenzte Sollwert für die Aktuatordrehzahl ist mit $\omega_{Akt,Soll,DR} = \omega_{Akt,Soll}$ bezeichnet und repräsentiert bei durch den Funktionsblock "Reglerselektion" 300 (Fig. 2) mit S=1 aktivierter Druckregelung die Ausgangsgröße $\omega_{Akt,Soll}$ des Funktionsblockes "Druck-/Aktuatorpositionsregelung" 400.

Die zweite Vorsteuerkomponente zur Erhöhung der Druckreglerdynamik umfasst die Berechnung und direkte Vorgabe des dem Druck-Sollwert $P_{V,Soll}$ entsprechenden Motormoments $M_{Akt,PV}$ durch den Funktionsblock 407 ("Berechnung Vorsteuermoment"), dem als Eingangsgrößen die vorhin genannten Systemgrößen $P_{V,Soll}$, $P_{V,Ist}$ sowie die Ausgangsgröße des Drehzahl-Sollwertberechnungsmoduls 406 zugeführt werden. Mit Hilfe des Verstärkungsfaktors $K_{Prs,2}$ (mit $K_{Prs,2}$ zwischen 0 und 1) (Funktionsblock 408) kann definiert werden, wie stark diese Momentenvorsteuerung gewichtet wird; dabei bedeutet ein Wert $K_{Prs,2} = 1$ eine 100% Gewichtung. Ausgangsgröße der Momentenvorsteuerung, die zugleich auch den Drehzahlregler unterstützt, ist dann das Signal $M_{Akt,PV,FFW}$, das in der nachfolgend beschriebenen Drehzahlregelung 500 verarbeitet wird.

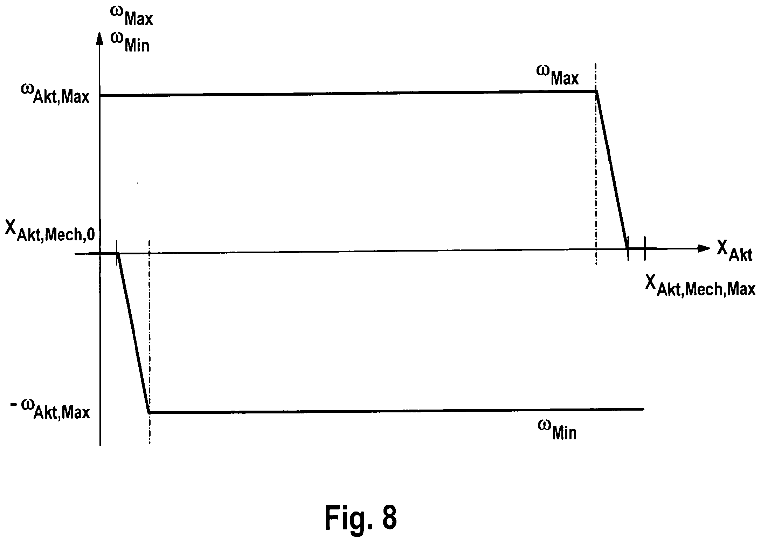

Wie Fig. 7 weiter zu entnehmen ist, wird das Ausgangssignal $\omega_{Akt,Soll}$ der Drehzahlbegrenzungsfunktion 405 einem Subtraktionsglied 507 zugeführt, in dem von $\omega_{Akt,Soll}$ der Istwert der Aktuatordrehzahl $\omega_{Akt}$ subtrahiert wird. Das Ergebnis $\Delta\omega$ der Subtraktion wird als Eingangsgröße einem AktuatorDrehzahlregler 501 zugeführt, dessen Ausgangsgröße $M_{Akt,Soll,Ctrl}$ einen Sollwert des vorhin genannten Aktuatormoments darstellt, wobei in einem Addierer 502 eine Addition des Sollwerts mit dem Ausgangswert $M_{Akt,PV,FFW}$ des vorhin erwähnten Funktionsblocks 408 durchgeführt wird. Das Ergebnis der Addition wird schließlich einer Momentenbegrenzung 503 unterworfen, deren Ausgangsgröße $M_{Akt,Soll}$ den Momentensollwert darstellt. Die Signalverläufe, die die Abhängigkeit der Aktuatordrehzahl-Grenzwerte $\omega_{Min}$, $\omega_{Max}$ von der Aktuatorposition $X_{Akt,Mech}$ repräsentieren, sind in Fig. 8 dargestellt.

Im Normalbetrieb der Bremse und der Druckregelung befindet sich der Aktuator in einer Position, in der in der Regelung keine Begrenzung der Solldrehzahl (vor allem in Richtung "Bremse betätigen") aktiv ist (also $\omega_{Max} = \omega_{Akt,Max}$). In diesem Fall wird das Motormoment $M_{Akt,PV}$ aus dem Sollwert $P_{V,Soll}$ für den Verstärkerdruck bestimmt. Nähert sich die Aktuatorposition der vorderen mechanischen Endlage, so wird die Drehzahlbegrenzungsfunktion 503 aktiv. Da in diesem Fall davon ausgegangen werden muss, dass der geforderte Druck-Sollwert $P_{V,Soll}$ nicht eingestellt werden kann, wird nun das Motormoment $M_{Akt,PV}$ zusätzlich aufgrund des aktuellen DruckIstwertes $P_{V,Ist}$ ermittelt. Das resultierende und an die Drehzahlregelung auszugebende Vorsteuermoment ergibt sich dann aus einer gewichteten Überlagerung der beiden Teilmomenten-Sollwerte, wobei die Gewichtung des aus dem Druck-sollwert ermittelten Wertes abnimmt, je größer die Begrenzung ist, während im gleichen Maße die Gewichtung die aus dem Druckistwertes ermittelte Größe zunimmt.

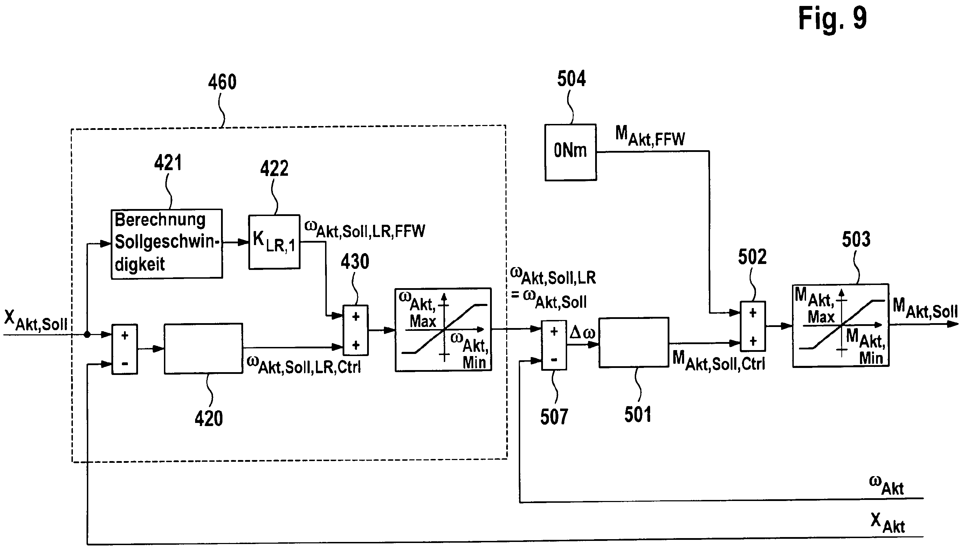

Der Aktuatorpositionsregler wird im Normalbetrieb der Bremsanlage mit S=0 aktiviert, wenn die Bremse gelöst werden soll (siehe Beschreibung "Reglerselektion" 300, Fig 2). Eine beispielsgemäße Grundstruktur 460 des Positionsreglers 420 mit nachgeschaltetem Aktuatordrehzahlregler 501 ist in Fig. 9 in Form eines Blockschaltbildes dargestellt. Auch hier wird dem Positionsregler 420 zur Dynamikunterstützung eine Geschwindigkeitsvorsteuerung 421, 422 parallel überlagert. Da in diesem Reglermodus der Druck-Sollwert $P_{V,Soll} = 0$ bar ist, ist hier keine Momentenvorsteuerung erforderlich, weshalb dieser Wert definiert auf $M_{Akt,PV,FFW} = 0$ Nm (Funktionsblock 504) gesetzt wird.

Es ist die Aufgabe des Drehzahlreglers 501, der üblicherweise proportional-integrierendes (PI-) Verhalten aufweist, die möglichst schnelle und genaue Einstellung der geforderten Solldrehzahl $\omega_{Akt,Soll}$ sowie die Kompensation der auf den Aktuator wirkenden Lastmomente, die beim Aktuator im Wesentlichen durch den eingestellten Druck verursacht werden, sicherzustellen.

Zur Verbesserung der oben beschriebenen Reglerstruktur werden die Funktionsblöcke "Reglerselektion" 300 und "Druck-/Aktuatorpositionsregelung" 400 erweitert, um das Druckreglerverhalten, insbesondere beim schnellen Druckaufbau, bezüglich der maximalen Druckaufbaudynamik zu verbessern. Hierzu wird eine kombinierte Druck-/Positionsregelung durchgeführt. Dabei sind beispielsgemäß in bestimmten Bremssituationen (z.B. bei einem schnellen Druckaufbau) beide Regler gleichzeitig aktiv und liefern einen mit einem Faktor gewichteten Beitrag zur Reglerstellgröße Motorsolldrehzahl $\omega_{Akt,Soll}$.

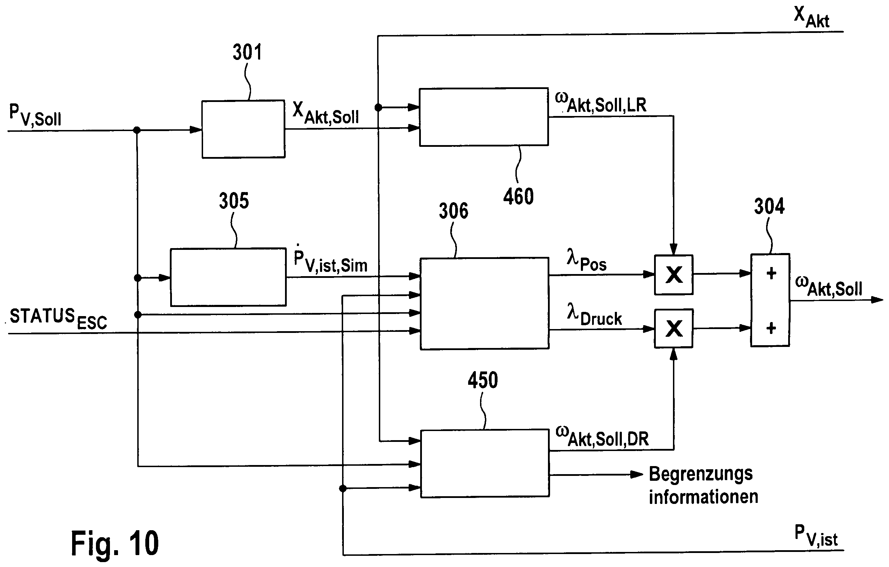

Fig. 10 zeigt ein Blockschaltbild einer beispielhaften kombinierten Druck-/Positionsregelung. Aus dem Druck-Sollwert $P_{V,Soll}$ wird mittels eines Druckmodells im Funktionsblock 301 ein dem Druck-Sollwert entsprechender Aktuatorweg-Sollwert $X_{Akt,Soll}$ ermittelt. Es sind verschiedene Ausführungen von Aktuatorpositionsregler 460 sowie Druckregler 450 denkbar. Optional wird die Aktuatoristposition $X_{Akt}$ dem Druckregler 450 als eine Eingangsgröße zugeführt (zur Bestimmung eines Drehzahl-Grenzsollwertes).

Beide Regler 460, 450 arbeiten parallel und liefern eine Stellgröße $\omega_{Akt,Soll,LR}$ bzw. $\omega_{Akt,Soll,DR}$ für die Aktuatordrehzahl entsprechend dem vorgesehenen Regleralgorithmus. Die resultierende Stellgröße als Drehzahlsollwert $\omega_{Akt,Soll}$ für den unterlagerten Drehzahlregler ergibt sich nun im Addierer 304 durch Addition der beiden Teilsollwerte, die jeweils mit einem Gewichtungsfaktor $\lambda_{Pos}$ bzw. $\lambda_{Druck}$ multipliziert werden. Die beiden Gewichtungsfaktoren werden in einem Funktionsblock 306 "Ermittlung Reglergewichtungsfaktor" ermittelt, dem ein Funktionsblock 305 vorgeschaltet ist. Dabei ist es von Vorteil, wenn für die beiden Gewichtungsfaktoren gilt: $\lambda_{Druck} + \lambda_{Pos} = 1$. Durch die Gewichtungsfaktoren $\lambda_{Druck}$ und $\lambda_{Pos}$ wird festgelegt, wie stark die einzelnen Regleranteile eingreifen.

Der Funktionsblock "Simulation Druckreglerdynamik" 305 dient der Ermittlung eines Wertes für den Druckgradienten $dP_{V,Ist,Sim}/dt$, basierend auf dem gegenwärtigen Drucksollwert $P_{V,Soll}$ sowie einem Modell für das dynamische Verhalten des geschlossenen Druckregelkreises, insbesondere unter Berücksichtigung der maximal möglichen Druckgradienten.

Wird aufgrund der Eingangsinformationen ein schneller Druckaufbau gefordert und sind keine Regeleingriffe seitens des übergeordneten ESC-Regelsystems vorhanden ($STATUS_{ESC} = 0$), so wird die Stellgröße des Aktuatorpositionsreglers 460 mit einem großen Gewicht $\lambda_{Pos} \approx 1$ gewichtet. Dadurch fährt der Aktuator unabhängig von der Druckinformation $P_{V,Ist}$ (und damit auch unbeeinflußt von der Staudruckinformation) gesteuert auf einen Positionswert $X_{Akt,Soll}$, der dem geforderten Sollverstärkerdruck $P_{V,Soll}$ näherungsweise entspricht. Bei abnehmenden Werten von $dP_{V,Ist,Sim}/dt$ wird der Parameter $\lambda_{Pos}$ kleiner, während $\lambda_{Druck}$ entsprechend wächst. Dadurch wird der Druckregler 450 stärker gewichtet und kann aufgrund der verfügbaren Druckinformation die stationäre Genauigkeit des Gesamtregelsystems sicherstellen.

Bei langsamen Druckänderungen sowie bei einem Druckabbau geht der Parameter $\lambda_{Pos}$ gegen den Wert 0, so dass dann nur noch der Druckregler 450 aktiv ist, der aufgrund der gemessenen Druckinformation den geforderten Druck-Sollwert mit höherer Genauigkeit einstellt. Durch diese Maßnahme wird erreicht, dass im Vergleich zum reinen Druckregler das Druckreglerverhalten bei einem schnellen Druckaufbau bezüglich der maximalen Druckaufbaudynamik verbessert wird.

Eine beispielsgemäße Funktionsweise des in Fig. 10 dargestellten Funktionsblocks "Ermittlung Reglergewichtungsfaktor" 306 lässt sich beschreiben durch:

$\lambda_{Pos} = 1$ und damit $\lambda_{Druck} = 0$, also nur Aktuatorpositionsregler 460,

wenn $P_{V,Soll}=0$ und $P_{V,Ist} < P_{V,\varepsilon}$ (Bremse lösen, $X_{Akt,Soll}=0$)
oder

wenn $P_{V,Soll} > 0$ und $dP_{V,Ist,Sim}/dt > dP_{V,\varepsilon2}$ und $STATUS_{ESC}=0$,

$\lambda_{Pos} = 0$ und damit $\lambda_{Druck} = 1$, also nur Druckregler 450,

wenn $STATUS_{ESC} <> 0$ (Eingriff seitens eines übergeordneten Druckregelsystems)
oder

wenn $P_{V,Soll} > 0$ und $dP_{V,Ist,Sim}/dt < dP_{V,\varepsilon1}$, mit vorgegebenem Parameter $dP_{V,\varepsilon1} > 0$,

$0 < \lambda_{Pos} = f(dP_{V,Ist,Sim}/dt) < 1$ und $\lambda_{Druck} = 1-\lambda_{Pos}$, also kombinierte Druck-/Aktuatorpositionsregelung,

wenn $STATUS_{ESC}=0$ und $P_{V,Soll} > 0$ und $dP_{V,\varepsilon1} < dP_{V,Ist,Sim}/dt < dP_{V,\varepsilon2}$, mit vorgegebenen Parametern $dP_{V,\varepsilon1}$ und $dP_{V,\varepsilon2}$.

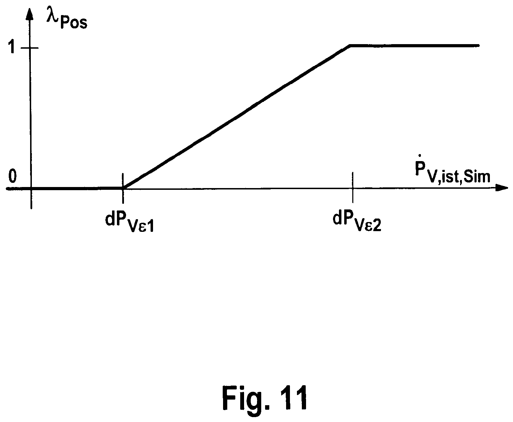

Fig. 11 zeigt eine beispielhafte Definition einer Funktion f zur Bestimmung des Gewichtsfaktors $\lambda_{Pos}$ des Aktuatorpositionsreglers 460 anhand des bestimmten Druckgradienten $dP_{V,Ist,Sim}/dt$:

$$\lambda_{Pos} = f(dP_{V,Ist,Sim}/dt).$$

## Patentansprüche

1. Verfahren zur Regelung eines elektrohydraulischen Bremssystems für Kraftfahrzeuge, welches vorzugsweise in einer "Brake-by-wire"-Betriebsart ansteuerbar ist, mit einer mittels einer elektronischen Steuer- und Regeleinheit ansteuerbaren Druckbereitstellungseinrichtung (2), welche mit zumindest einer hydraulisch betätigbaren Radbremse verbunden oder verbindbar ist und mittels welcher die Radbremse hydraulisch betätigbar ist, wobei die Druckbereitstellungseinrichtung (2) durch eine Zylinder-Kolben-Anordnung (43) gebildet wird, deren Kolben (45) durch einen elektromechanischen Aktuator (44) betätigbar ist, und wobei ein Druck-Sollwert ($P_{V,Soll}$) für die Druckbereitstellungseinrichtung (2) bestimmt wird, **dadurch gekennzeichnet, dass** in Abhängigkeit von der Größe des Druck-Sollwertes ($P_{V,Soll}$)

   • eine Druckregelung der Druckbereitstellungseinrichtung (2) oder
   • eine Aktuatorpositionsregelung der Druckbereitstellungseinrichtung (2) aktiviert wird.

2. Verfahren nach Anspruch 1, **dadurch gekennzeichnet, dass** sowohl bei Druckregelung als auch bei Aktuatorpositionsregelung ein Sollwert für die Aktuatorgeschwindigkeit ($\omega_{Akt,Soll}$), insbesondere die Drehzahl eines Elektromotors des Aktuators (30), vorgegeben wird.

3. Verfahren nach Anspruch 1 oder 2, **dadurch gekennzeichnet, dass** ein Fahrerwunsch-Drucksollwert ($P_{V,Soll,Drv}$) anhand zumindest zweier unabhängiger Informationen von mindestens einer Sensorvorrichtung bestimmt wird.

4. Verfahren nach Anspruch 3, **dadurch gekennzeichnet, dass** eine Sollwertauswahl (200) zwischen dem Fahrerwunsch-Drucksollwert ($P_{V,Soll,Drv}$) und einem von einem übergeordneten Regelsystem, wie insbesondere Antiblockiersystem, Traktionsregelsystem, Abstandsregelsystem oder Fahrdynamikregelsystem, vorgegebenen weiteren Drucksollwert ($P_{V,Soll,ESC}$) durchgeführt wird und der in der Sollwertauswahl (200) bestimmte Drucksollwert ($P_{V,Soll}$) zur Entscheidung (300) über die Durchführung einer Druckregelung oder einer Aktuatorpositionsregelung herangezogen wird.

5. Verfahren nach mindestens einem der Ansprüche 1 bis 4, **dadurch gekennzeichnet, dass** eine Druckregelung der Druckbereitstellungseinrichtung (2) durchgeführt wird, wenn der Drucksollwert ($P_{V,Soll}$) größer als ein vorgegebener Druck-Schwellenwert, insbesondere größer als Null bar, ist.

6. Verfahren nach mindestens einem der Ansprüche 1 bis 5, **dadurch gekennzeichnet, dass** bei der Druckregelung einem Druckregler (401), welcher einen ersten Druckregler-Geschwindigkeitssollwert ($\omega_{Akt,Soll,DR,Ctrl}$) ausgibt, eine Geschwindigkeitsvorsteuerung (402, 403) überlagert wird, welche einen zweiten Druckregler-Geschwindigkeitssollwert ($\omega_{Akt,Soll,DR,FFW}$) ausgibt, wobei der erste und der zweite Druckregler-Geschwindigkeitssollwert ($\omega_{Akt,Soll,DR,Ctrl}$, $\omega_{Akt,Soll,DR,FFW}$) addiert werden.

7. Verfahren nach Anspruch 6, **dadurch gekennzeichnet, dass** aus der Summe von erstem und der zweitem Druckregler-Geschwindigkeitssollwert unter Berücksichtigung von vorgegebenen minimalen und maximalen Geschwindigkeitsgrenzwerten ($\omega_{Min}$, $\omega_{Max}$), und insbesondere unter Berücksichtigung einer vorgegebenen Geschwindigkeits-Begrenzungsfunktion (405), welche einen Zusammenhang zwischen der aktuellen Aktuatorposition ($X_{Akt}$) und den zugehörigen minimalen und maximalen Geschwindigkeitsgrenzwerten ($\omega_{Min}$, $\omega_{Max}$) vorgibt, ein begrenzter Druckregler-Geschwindigkeitssollwert ($\omega_{Akt,Soll}$) bestimmt wird.

8. Verfahren nach mindestens einem der Ansprüche 1 bis 7, **dadurch gekennzeichnet, dass** bei der Druckregelung eine Aktuatormomentenvorsteuerung (407, 408) durchgeführt wird, bei welcher ein dem Drucksollwert ($P_{V,Soll}$) entsprechendes Motormoment ($M_{Akt,Pv}$) bestimmt wird, wobei insbesondere zur Bestimmung des Motormoments ($M_{Akt,Pv}$) im Falle einer Geschwindigkeits-Begrenzung zusätzlich auch der aktuell von der Druckbereitstellungseinrichtung (2) bereitgestellte Druck ($P_{V,Ist}$) berücksichtigt wird.

9. Verfahren nach mindestens einem der Ansprüche 1 bis 8, **dadurch gekennzeichnet, dass** eine Aktuatorpositionsregelung der Druckbereitstellungseinrichtung (2) durchgeführt wird, wenn der Drucksollwert ($P_{V,Soll}$) kleiner oder gleich einem vorgegebenen Druck-schwellenwert ist, insbesondere gleich Null bar ist, und der aktuell von der Druckbereitstellungseinrichtung (2) bereitgestellte Druck ($P_{V,Ist}$) kleiner als ein vorgegebener Mindestdruckschwellenwert ($P_{V,Ist,Min}$) ist.

10. Verfahren nach mindestens einem der Ansprüche 1 bis 9, **dadurch gekennzeichnet, dass** bei der Aktuatorpositionsregelung einem Positionsregler (420), welcher einen ersten Positionsregler-Geschwindigkeitssollwert ($\omega_{Akt,Soll,LR,Ctrl}$) ausgibt, eine Geschwindigkeitsvorsteuerung (421, 422) überlagert wird, welche einen zweiten Positionsregler-Geschwindigkeitssollwert ($\omega_{Akt,Soll,LR,FFW}$) ausgibt, wobei der erste und der zweite Positionsregler-Geschwindigkeitssollwert ($\omega_{Akt,Soll,LR,Ctrl}$, $\omega_{Akt,Soll,LR,FFW}$) addiert werden.

11. Verfahren nach mindestens einem der Ansprüche 1 bis 10, **dadurch gekennzeichnet, dass** nach der Druck- oder Aktuatorpositionsregelung (400) eine Aktuatorgeschwindigkeitsregelung (500) durchgeführt wird, in welcher die aktuelle Aktuatorgeschwindigkeit ($\omega_{Akt}$) auf den von der Druck- oder Aktuatorpositionsregelung ausgegebenen Sollwert für die Aktuatorgeschwindigkeit ($\omega_{Akt,Soll}$) geregelt wird.

12. Verfahren nach einem oder mehreren der vorhergehenden Ansprüche **dadurch gekennzeichnet, dass** ein Drucksollwert ($P_{V,soll}$, $P_{V,Soll,Drv}$) bestimmt wird, wobei bei der Bestimmung des Drucksollwertes ($P_{V,Soll}$, $P_{V,Soll,Drv}$) eine Betätigungsgeschwindigkeit ($V_{Ped}$) eines Bremspedals (19) berücksichtigt wird.

13. Verfahren nach Anspruch 12, **dadurch gekennzeichnet, dass** der Drucksollwert ($P_{V,Soll}$) , insbesondere der Fahrerwunsch-Drucksollwert ($P_{V,Soll,Drv}$), aus der Summe eines ersten Solldruckanteils ($P_{V,Soll,Drv,Stat}$) und eines zweiten Solldruckanteils ($P_{V,Soll,Drv,Dyn}$) gebildet wird.

14. Verfahren nach Anspruch 13, **dadurch gekennzeichnet, dass** der erste Solldruckanteil ($P_{V,Soll,Drv,Stat}$) anhand eines vorgegebenen funktionalen Zusammenhangs ($f(X_{Ped})$, $f(X_{Ped}, P_{Drv}, V_{Kfz})$) aus zumindest einer Pedalbetätigungsinformation, insbesondere einer Pedalposition/-weg ($X_{Ped}$) und/oder einer Druckinformation ($P_{Drv}$), bestimmt wird.

15. Verfahren nach Anspruch 13 oder 14, **dadurch gekennzeichnet, dass** der zweite Solldruckanteil ($P_{V,Soll,Drv,Dyn}$)

in Abhängigkeit von der Bremspedal-Betätigungsgeschwindigkeit ($V_{Ped}$) und einer Pedalgeschwindigkeitsschwelle ($V_{Ped,Limit}$) bestimmt wird.

16. Verfahren nach einem oder mehreren der vorhergehenden Ansprüche **dadurch gekennzeichnet, dass** ein, insbesondere erwarteter, Druckgradient ($dP_{V,Ist,Sim}/dt$) bestimmt wird, und dass in Abhängigkeit von der Größe des Druck-sollwertes ($P_{V,Soll}$) und/oder der Größe des Druckgradienten ($dP_{V,Ist,Sim}/dt$) eine Druckregelung (450) oder eine Aktuatorpositionsregelung (460) oder eine kombinierte Druck-/Aktuatorpositionsregelung der Druckbereitstellungseinrichtung (2) durchgeführt wird.

17. Verfahren nach Anspruch 16, **dadurch gekennzeichnet, dass** anhand des Drucksollwertes ($P_{V,Soll}$) in einem Aktuatorpositionsregler (460) ein erster Teil-Sollwert für die Aktuatordrehzahl ($\omega_{Akt,Soll,LR}$) und in einem Druckregler (450) ein zweiter Teil-Sollwert für die Aktuatorgeschwindigkeit ($\omega_{Akt,Soll,DR}$) bestimmt werden, und dass aus dem ersten und dem zweiter Teil-Sollwert ein Sollwert für die Aktuatorgeschwindigkeit ($\omega_{Akt,Soll}$) einer Geschwindigkeitsregelung (500) der Druckbereitstellungseinrichtung (2) bestimmt wird.

18. Verfahren nach Anspruch 17, **dadurch gekennzeichnet, dass** der Sollwert für die Aktuatorgeschwindigkeit ($\omega_{Akt,Soll}$) durch gewichtete Addition (304) aus dem ersten und dem zweiter Teil-Sollwert bestimmt wird, wobei insbesondere der jeweilige Gewichtungsfaktor ($\lambda_{Pos}$, $\lambda_{Druck}$) in Abhängigkeit von dem erwarteten Druckgradienten ($dP_{V,Ist,Sim}/dt$) bestimmt wird (306) .

19. Verfahren nach mindestens einem der Ansprüche 16 bis 18, **dadurch gekennzeichnet, dass** der Druckgradient ($dP_{V,Ist,Sim}/dt$) anhand des Drucksollwertes ($P_{V,Soll}$) und eines vorgegebenen Modells des Regelverhaltens der Druckbereitstellungseinrichtung (2) bestimmt wird (305) .

20. Regelschaltung zur Durchführung des Verfahrens nach einem oder mehreren der vorhergehenden Ansprüche 1 bis 19.

## Claims

1. Method for controlling an electrohydraulic braking system for motor vehicles, said system preferably being activatable in a "brake-by-wire" operating mode, having a pressure supply device (2), which can be activated by means of an electronic control and regulation unit, which is connected or can be connected to at least one hydraulically actuatable wheel brake and by means of which the wheel brake can be hydraulically actuated, wherein the pressure supply device (2) is formed by a cylinder-piston assembly (43), the piston (45) of which can be actuated by an electromechanical actuator (44), and wherein a pressure target value ($P_{V,Soll}$) is determined for the pressure supply device (2), **characterized in that**

    • a pressure control operation on the pressure supply device (2) or
    • an actuator position control operation on the pressure supply device (2)

    is activated in accordance with the magnitude of the pressure target value ($P_{V,Soll}$).

2. Method according to Claim 1, **characterized in that** a target value for the actuator speed ($\omega_{Akt,Soll}$), in particular the rotational speed of an electric motor of the actuator (30), is specified both during pressure control and during actuator position control.

3. Method according to Claim 1 or 2, **characterized in that** a driver's required pressure target value ($P_{V,Soll,Drv}$) is determined using at least two independent items of information from at least one sensor device.

4. Method according to Claim 3, **characterized in that** a target value selection (200) between the driver's required pressure target value ($P_{V,Soll,Drv}$) and another pressure target value ($P_{V,Soll,ESC}$) specified by a higher-ranking control system, such as, in particular, an antilock system, a traction control system, an adaptive cruise control system or a vehicle dynamics control system, is performed, and the pressure target value ($P_{V,Soll}$) determined in the target value selection (200) is used to decide (300) on the performance of a pressure control operation or an actuator position control operation.

5. Method according to at least one of Claims 1 to 4, **characterized in that** a pressure control operation on the pressure supply device (2) is performed if the pressure target value ($P_{V,Soll}$) is greater than a predetermined pressure threshold value, in particular greater than zero bar.

6. Method according to at least one of Claims 1 to 5, **characterized in that**, during the pressure control operation, a pressure controller (401), which outputs a first pressure-controller speed target value ($\omega_{Akt,Soll,DR,Ctrl}$), has superimposed upon it a speed feedforward function (402, 403), which outputs a second pressure-controller speed target value ($\omega_{Akt,Soll,DR,FFW}$), wherein the first and second pressure-controller speed target values ($\omega_{Akt,Soll,DR,Ctrl}$, $\omega_{Akt,Soll,DR,FFW}$) are added.

7. Method according to Claim 6, **characterized in that** a limited pressure-controller speed target value ($\omega_{Akt,Soll}$) is determined from the sum of the first and second pressure-controller speed target values, taking into account predetermined minimum and maximum speed limiting values ($\omega_{Min}$, $\omega_{Max}$), and in particular taking into account a predetermined speed limiting function (405), which specifies a relationship between the current actuator position ($X_{Akt}$) and the associated minimum and maximum speed limiting values ($\omega_{Min}$, $\omega_{Max}$).

8. Method according to at least one of Claims 1 to 7, **characterized in that**, during pressure control, an actuator torque feedforward operation (407, 408) is performed, during which a motor torque ($M_{Akt,Pv}$) corresponding to the pressure target value ($P_{V,Soll}$) is determined, wherein the pressure ($P_{V,Ist}$) currently being supplied by the pressure supply device (2) is additionally also taken into account, especially for the purpose of determining the motor torque ($M_{Akt,Pv}$) in the case of a speed limiting operation.

9. Method according to at least one of Claims 1 to 8, **characterized in that** an actuator position control operation is performed on the pressure supply device (2) if the pressure target value ($P_{V,Soll}$) is less than or equal to a predetermined pressure threshold value, in particular is equal to zero bar, and the pressure ($P_{V,Ist}$) currently being supplied by the pressure supply device (2) is less than a predetermined minimum pressure threshold value ($P_{V,Ist,Min}$).

10. Method according to at least one of Claims 1 to 9, **characterized in that**, during the actuator position control operation, a position controller (420), which outputs a first position-controller speed target value ($\omega_{Akt,Soll,LR,Ctrl}$), has superimposed upon it a speed feedforward function (421, 422), which outputs a second position-controller speed target value ($\omega_{Akt,Soll,LR,FFM}$), wherein the first and second position-controller speed target values ($\omega_{Akt,Soll,LR,Ctrl}$, $\omega_{Akt,Soll,LR,FFW}$) are added.

11. Method according to at least one of Claims 1 to 10, **characterized in that**, after the pressure or actuator position control operation (400), an actuator speed control operation (500) is performed, in which the current actuator speed ($\omega_{Akt}$) is adjusted to the target value for the actuator speed ($\omega_{Akt,Soll}$) output by the pressure or actuator position control operation.

12. Method according to one or more of the preceding claims, **characterized in that** a pressure target value ($P_{V,Soll}$, $P_{V,Soll,Drv}$) is determined, wherein, in determining the pressure target value ($P_{V,Soll}$, $P_{V,Soll,Drv}$), an actuating speed ($V_{Ped}$) of a brake pedal (19) is taken into account.

13. Method according to Claim 12, **characterized in that** the pressure target value ($P_{V,Soll}$) , in particular the driver's required pressure target value ($P_{V,Soll,Drv}$) , is formed from the sum of a first target pressure component ($P_{V,Soll,Drv,Stat}$) and a second target pressure component ($P_{V,Soll,Drv,Dyn}$).

14. Method according to Claim 13, **characterized in that** the first target pressure component ($P_{V,Soll,Drv,Stat}$) is determined using a predetermined functional relationship ($f(X_{Ped})$, $f(X_{Ped}, P_{Drv}, V_{Kfz})$) from at least one item of information on the pedal actuation, in particular a pedal position/travel ($X_{Ped}$) and/or pressure information ($P_{Drv}$).

15. Method according to Claim 13 or 14, **characterized in that** the second target pressure component ($P_{V,Soll,Drv,Dyn}$) is determined in accordance with the brake pedal actuation speed ($V_{Ped}$) and a pedal speed threshold ($V_{Ped,Limit}$).

16. Method according to one or more of the preceding claims, **characterized in that** a pressure gradient ($dP_{V,Ist,Sim}/dt$), in particular an expected pressure gradient, is determined, and that a pressure control operation (450) or an actuator position control operation (460) or a combined pressure/actuator position control operation is performed on the pressure supply device (2) in accordance with the magnitude of the pressure target value ($P_{V,Soll}$) and/or the magnitude of the pressure gradient ($dP_{V,Ist,Sim}/dt$) .

**17.** Method according to Claim 16, **characterized in that** the pressure target value ($P_{V,Soll}$) is used in an actuator position controller (460) to determine a first component target value for the actuator rotational speed ($\omega_{Akt,Soll,LR}$) and is used in a pressure controller (450) to determine a second component target value for the actuator speed ($\omega_{Akt,Soll,DR}$), and **in that** a target value for the actuator speed ($\omega_{Akt,Soll}$) in a speed control operation (500) on the pressure supply device (2) is determined from the first and second component target values.

**18.** Method according to Claim 17, **characterized in that** the target value for the actuator speed ($\omega_{Akt,Soll}$) is determined from the first and second component target values by weighted addition (304), wherein, in particular, the respective weighting factor ($\lambda_{Pos}$, $\lambda_{Druck}$) is determined (306) in accordance with the expected pressure gradient ($dP_{V,Ist,Sim}/dt$).

**19.** Method according to at least one of Claims 16 to 18, **characterized in that** the pressure gradient ($dP_{V,Ist,Sim}/dt$) is determined (305) using the pressure target value ($P_{V,Soll}$) and a predetermined model of the control behavior of the pressure supply device (2).

**20.** Control circuit for performing the method according to one or more of preceding Claims 1 to 19.

**Revendications**

**1.** Procédé de régulation d'un système de freinage électrohydraulique pour véhicules automobiles, lequel peut de préférence être commandé dans un mode de fonctionnement en « frein câblé », comprenant un dispositif de fourniture de pression (2) qui peut être commandé par le biais d'une unité de commande et de régulation électronique, lequel est relié ou peut être relié à au moins un frein de roue à actionnement hydraulique et au moyen duquel le frein de roue peut être actionné hydrauliquement, le dispositif de fourniture de pression (2) étant formé par un arrangement cylindre-piston (43) dont le piston (45) peut être actionné par un actionneur électromécanique (44) et une valeur de consigne de pression ($P_{V,Soll}$) étant définie pour le dispositif de fourniture de pression (2), caractérisé en ce

* qu'une régulation de pression du dispositif de fourniture de pression (2) ou
* une régulation de position d'actionneur du dispositif de fourniture de pression (2)

est activée en fonction de la grandeur de la valeur de consigne de pression ($P_{V,Soll}$).

**2.** Procédé selon la revendication 1, **caractérisé en ce qu'**une valeur de consigne pour la vitesse d'actionneur ($\omega_{Akt,Soll}$), notamment la vitesse de rotation d'un moteur électrique de l'actionneur (30), est prédéfinie lors de la régulation de pression et aussi lors de la régulation de position d'actionneur.

**3.** Procédé selon la revendication 1 ou 2, **caractérisé en ce qu'**une valeur de consigne de pression souhaitée du conducteur ($P_{V,Soll,Drv}$) est définie au moyen d'au moins deux informations indépendantes d'au moins un appareil d'asservissement.

**4.** Procédé selon la revendication 3, **caractérisé en ce qu'**une sélection de valeur de consigne (200) entre la valeur de consigne de pression souhaitée du conducteur ($P_{V,Soll,Drv}$) et une valeur de consigne de pression supplémentaire ($P_{V,Soll,ESC}$) prédéfinie par un système de régulation superviseur, comme notamment un système antiblocage, un système de régulation de traction, un système de régulation de distance ou un système de régulation de la dynamique de conduite, est effectuée et la valeur de consigne de pression ($P_{V,Soll}$) définie dans la sélection de valeur de consigne (200) est utilisée pour la décision (300) relative à l'exécution d'une régulation de pression ou d'une régulation de position d'actionneur.

**5.** Procédé selon au moins l'une des revendications 1 à 4, **caractérisé en ce qu'**une régulation de pression du dispositif de fourniture de pression (2) est exécutée lorsque la valeur de consigne de pression ($P_{V,Soll}$) est supérieure à une valeur de seuil de pression prédéfinie, notamment supérieure à zéro bar.

**6.** Procédé selon au moins l'une des revendications 1 à 5, **caractérisé en ce que** lors de la régulation de pression, une précommande de la vitesse (402, 403), laquelle délivre une deuxième valeur de consigne de vitesse de régulateur de pression ($\omega_{Akt,Soll,DR,FFW}$), est superposée à un régulateur de pression (401), lequel délivre une première valeur de consigne de vitesse de régulateur de pression ($\omega_{Akt,Soll,DR,Ctrl}$), la première et la deuxième valeur de consigne de vitesse de régulateur de pression ($\omega_{Akt,Soll,DR,Ctrl}$, $\omega_{Akt,Soll,DR,FFW}$) étant additionnées.

**7.** Procédé selon la revendication 6, **caractérisé en ce qu'**une valeur de consigne de vitesse de régulateur de pression limitée ($\omega_{Akt,Soll}$) est définie à partir de la somme de la première et de la deuxième valeur de consigne de vitesse de régulateur de pression en tenant compte de valeurs limites de vitesse minimale et maximale ($\omega_{Min}$, $\omega_{Max}$), et notamment en tenant compte d'une fonction de limitation de la vitesse (405) prédéfinie qui prédéfinit une relation entre la position d'actionneur actuelle ($X_{Akt}$) et les valeurs limites de vitesse minimale et maximale ($\omega_{Min}$, $\omega_{Max}$) associées.

**8.** Procédé selon au moins l'une des revendications 1 à 7, **caractérisé en ce que** lors de la régulation de pression, une précommande de couple d'actionneur (407, 408) est exécutée, lors de laquelle est défini un couple de moteur ($M_{Akt,Pv}$) correspondant à la valeur de consigne de pression ($P_{V,Soll}$), la pression fournie ($P_{V,Ist}$) par le dispositif de fourniture de pression (2) étant en plus également prise en compte, notamment pour la définition du couple de moteur ($M_{Akt,Pv}$) dans le cas d'une limitation de vitesse.

**9.** Procédé selon au moins l'une des revendications 1 à 8, **caractérisé en ce qu'**une régulation de position d'actionneur du dispositif de fourniture de pression (2) est exécutée lorsque la valeur de consigne de pression ($P_{V,Soll}$) est inférieure ou égale à une valeur de seuil de pression prédéfinie, notamment égale à zéro bar, et la pression ($P_{V,Ist}$) actuelle fournie par le dispositif de fourniture de pression (2) est inférieure à une valeur de seuil de pression minimale ($P_{V,Ist,Min}$) prédéfinie.

**10.** Procédé selon au moins l'une des revendications 1 à 9, **caractérisé en ce que** lors de la régulation de position d'actionneur, une précommande de la vitesse (421, 422), laquelle délivre une deuxième valeur de consigne de vitesse de régulateur de position ($\omega_{Akt,Soll,LR,FFW}$), est superposée à un régulateur de position (420), lequel délivre une première valeur de consigne de vitesse de régulateur de position ($\omega_{Akt,Soll,LR,Ctrl}$), la première et la deuxième valeur de consigne de vitesse de régulateur de position ($\omega_{Akt,Soll,LR,Ctrl}$, $\omega_{Akt,Soll,LR,FFW}$) étant additionnées.

**11.** Procédé selon au moins l'une des revendications 1 à 10, **caractérisé en ce qu'**après la régulation de pression ou de position d'actionneur (400) est exécutée une régulation de vitesse d'actionneur (500) dans laquelle la vitesse d'actionneur actuelle ($\omega_{Akt}$) est régulée à la valeur de consigne pour la vitesse d'actionneur ($\omega_{Akt,Soll}$) délivrée par la régulation de pression ou de position d'actionneur.

**12.** Procédé selon une ou plusieurs des revendications précédentes, **caractérisé en ce qu'**une valeur de consigne de pression ($P_{V,Soll}$, $P_{V,Soll,Drv}$) est définie, une vitesse d'actionnement ($V_{Ped}$) d'une pédale de frein (19) est prise en compte lors de la définition de la valeur de consigne de pression ($P_{V,Soll}$, $P_{V,Soll,Drv}$).

**13.** Procédé selon la revendication 12, **caractérisé en ce que** la valeur de consigne de pression ($P_{V,Soll}$), notamment la valeur de consigne de pression souhaitée du conducteur ($P_{V,Soll,Drv}$), est formée par la somme d'une première composante de pression de consigne ($P_{V,Soll,Drv,Stat}$) et d'une deuxième composante de pression de consigne ($P_{V,Soll,Drv,Dyn}$).

**14.** Procédé selon la revendication 13, **caractérisé en ce que** la première composante de pression de consigne ($P_{V,Soll,Drv,Stat}$) est définie au moyen d'une relation fonctionnelle prédéfinie ($f(X_{Ped})$, $f(X_{Ped}, P_{Drv}, V_{Kfz})$) à partir d'au moins une information d'actionnement de pédale, notamment d'une position/course de pédale ($X_{Ped}$) et/ou d'une information de pression ($P_{Drv}$).

**15.** Procédé selon la revendication 13 ou 14, **caractérisé en ce que** la deuxième composante de pression de consigne ($P_{V,Soll,Drv,Dyn}$) est définie en fonction de la vitesse d'actionnement ($V_{Ped}$) de la pédale de frein et d'un seuil de vitesse d'actionnement de pédale ($V_{Ped,Limit}$).

**16.** Procédé selon une ou plusieurs des revendications précédentes, **caractérisé en ce qu'**un gradient de pression ($dP_{V,Ist,Sim}/dt$), notamment attendu, est défini, et **en ce qu'**une régulation de pression (450) ou une régulation de position d'actionneur (460) ou une régulation combinée de pression/position d'actionneur du dispositif de fourniture de pression (2) est exécutée en fonction de la grandeur de la valeur de consigne de pression ($P_{V,Soll}$) et/ou de la grandeur du gradient de pression ($dP_{V,Ist,Sim}/dt$).

**17.** Procédé selon la revendication 16, **caractérisé en ce qu'**une première valeur de consigne partielle pour la vitesse de rotation d'actionneur ($\omega_{Akt,Soll,LR}$) est définie dans un régulateur de position d'actionneur (460) et une deuxième valeur de consigne partielle pour la vitesse de rotation d'actionneur ($\omega_{Akt,Soll,DR}$) est définie dans un régulateur de pression (450) au moyen de la valeur de consigne de pression ($P_{V,Soll}$), et **en ce qu'**une valeur de consigne pour la vitesse d'actionneur ($\omega_{Akt,Soll}$) d'une régulation de vitesse (500) du dispositif de fourniture de pression (2) est définie à partir de la première et de la deuxième valeur de consigne partielle.

18. Procédé selon la revendication 17, **caractérisé en ce que** la valeur de consigne pour la vitesse d'actionneur ($\omega_{Akt,Soll}$) est définie par addition pondérée (304) à partir de la première et de la deuxième valeur de consigne partielle, la fonction de pondération ($\lambda_{Pos}$, $\lambda_{Druck}$) correspondante étant notamment définie (306) en fonction du gradient de pression ($dP_{V,Ist,Sim}/dt$) attendu.

19. Procédé selon au moins l'une des revendications 16 à 18, **caractérisé en ce que** le gradient de pression ($dP_{V,Ist,Sim}/dt$) est défini (305) au moyen de la valeur de consigne de pression ($P_{V,Soll}$) et d'un modèle prédéfini du comportement de régulation du dispositif de fourniture de pression (2).

20. Circuit de régulation destiné à mettre en oeuvre le procédé selon une ou plusieurs des revendications précédentes 1 à 19.

Fig. 1

EP 2 580 096 B1

**Fig. 2**

# Fig. 3

$P_{Drv}$

$V_{Kfz}$

$X_{Ped}$

101

$P_{V,Soll,Drv,Stat}$

103

$P_{V,Soll,Drv,}$

+

+

102

$P_{V,Soll,Drv,Dyn}$

103

$V_{Ped}$

# Fig. 4

$X_{Ped}$

$f_{sw}(X_{Ped})$

X

$V_{Ped,Limit}$

$V_{Ped}$

$f_{V,SC}(V_{Kfz})$

104

EP 2 580 096 B1

**Fig. 5**

Berechnung $V_{Ped,Limit}$ —110

$Q_{P,Dyn} = V_{Ped} / V_{Ped,Limit}$ —111

112

Falls $X_{Ped} > X_{Ped,Max}$, dann setze: $X_{Ped,Max} = X_{Ped}$

$X_{Ped,Ref} = X_{Ped,Max} \cdot \varepsilon_{X,Ref}$ —113

114

115

$Q_{P,Dyn} > 1$ — FALSE

TRUE

$P_{V,Soll,Drv,Dyn,aktuell} = (Q_{P,Dyn} - 1) * P_{V,Soll,Drv,Stat}$

Falls $P_{V,Soll,Drv,Dyn,aktuell} > P_{V,Soll,Drv,Dyn,Max}$,
dann setze: $P_{V,Soll,Drv,Dyn,Max} = P_{V,Soll,Drv,Dyn,aktuell}$

116

$P_{V,Soll,Drv,Dyn,} = P_{V,Soll,Drv,Dyn,Max}$

117

118

$X_{Ped} > X_{Ped,Dyn,0}$ — FALSE

122

$P_{V,Soll,Drv,Dyn,} = 0$

TRUE

119

$X_{Ped} < X_{Ped,Ref}$ — FALSE

TRUE

120

$P_{V,Soll,Drv,Dyn,aktuell} = P_{V,Soll,Drv,Dyn,Max} * (X_{Ped} - X_{Ped,Dyn,0} / (X_{Ped,Ref} - X_{Ped,Dyn,0})$

Falls $P_{V,Soll,Drv,Dyn,aktuell} < P_{V,Soll,Drv,Dyn} (K-1)$,
dann setze: $P_{V,Soll,Drv,Dyn,} = P_{V,Soll,Drv,Dyn,aktuell}$

121

$$\text{Req}_{ESC}$$

**201** → $= 1$ — FALSE

TRUE

**202** → $P_{V,Soll,ESC} > P_{V,Soll,Drv}$ — FALSE

**203** TRUE

$P_{V,Soll} = P_{V,Soll,ESC}$

**204**

$P_{V,Soll} = P_{V,Soll,Drv}$

**205**

$P_{V,Soll} = P_{V,Soll,Drv}$

$P_{V,Soll}$

**Fig. 6**

# Fig. 7

Fig. 8

EP 2 580 096 B1

Fig. 9

EP 2 580 096 B1

Fig. 10

$X_{Akt}$

$\omega_{Akt,Soll}$

304

$\omega_{Akt,Soll,LR}$

460

$\lambda_{Pos}$

$\lambda_{Druck}$

306

$\omega_{Akt,Soll,DR}$

450

Begrenzungs informationen

$P_{V,ist}$

301

$X_{Akt,Soll}$

305

$P_{V,ist,Sim}$

$P_{V,Soll}$

$STATUS_{ESC}$

**Fig. 11**

**IN DER BESCHREIBUNG AUFGEFÜHRTE DOKUMENTE**

**In der Beschreibung aufgeführte Patentdokumente**

- WO 2008025797 A1

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*